**Europäisches Patentamt**

**European Patent Office**

**Office européen des brevets**

(19)

(11) Veröffentlichungsnummer : **0 172 562 B1**

(12)

# EUROPÄISCHE PATENTSCHRIFT

(45) Veröffentlichungstag der Patentschrift :
02.03.88

(51) Int. Cl.⁴ : **C 08 L 27/06**

(21) Anmeldenummer : 85110448.9

(22) Anmeldetag : 20.08.85

(54) Kunststoffmasse auf Basis von Vinylchlorid-Polymerisat.

(30) Priorität : 24.08.84 DE 3431201
03.07.85 DE 3523788

(43) Veröffentlichungstag der Anmeldung :
26.02.86 Patentblatt 86/09

(45) Bekanntmachung des Hinweises auf die Patenterteilung : 02.03.88 Patentblatt 88/09

(84) Benannte Vertragsstaaten :
AT BE CH DE FR GB IT LI NL

(56) Entgegenhaltungen :
EP-A- 0 104 433
AT-B- 268 659
DE-A- 2 520 229
DE-A- 2 716 853
Die Akte enthält technische Angaben, die nach dem Eingang der Anmeldung eingereicht wurden und die nicht in dieser Patentschrift enthalten sind.

(73) Patentinhaber : WACKER-CHEMIE GMBH
Prinzregentenstrasse 22
D-8000 München 22 (DE)

(72) Erfinder : Haller, Ingo
Immanuel-Kant-Strasse 26a
D-8263 Burghausen (DE)
Erfinder : Spindler, Ernst, Dr. Dipl.-Phys.
Lindacher-Strasse 83
D-8263 Burghausen (DE)
Erfinder : Heisler, Manfred, Dr. Dipl.-Chem.
Lortzingweg 9
D-8263 Burghausen (DE)
Erfinder : Kleine, Willi, Dr. Dipl.-Chem.
Schopenhauerweg 3
D-8263 Burghausen (DE)

**Beschreibung**

Die Erfindung betrifft eine Kunststoffmasse auf Basis von Vinylchlorid-Polymerisat zur Herstellung von Formkörpern, flächigen Gebilden, Belägen oder Beschichtungen mit seidenmatter Oberfläche, die aus einem Matrixpolymerisat, 1 bis 50 Gew.-%, bezogen auf das Gesamtgewicht der eingesetzten Polymeren, eines hochmolekularen Vinylchloridpolymerisats und gegebenenfalls weiteren Zusätzen besteht, sowie das Mattierungsmittel, das in dieser Kunststoffmasse enthalten ist.

Kunststoffartikel besitzen im allgemeinen vielfach unerwünscht glänzende Oberflächen. Dementsprechend beschäftigen sich bereits eine ganze Reihe von Veröffentlichungen mit der Lösung dieses Problems, insbesondere mit der Erzeugung einer möglichst gleichmäßigen matten Oberfläche für die verschiedensten Kunststoffartikel. So werden bereits Verfahren zur Erzeugung matter Folien beschrieben, bei denen die Kalanderauslaufwalzen aufgerauht sind und so der Folie ein- oder beidseitig durch Prägen ein mattes Aussehen geben sollen. Abgesehen vom Nachteil, daß die Oberflächen dieser in der Anschaffung sehr teuren Werkzeuge wegen Abnutzung häufig nachbehandelt werden müssen, läßt sich damit kaum eine gleichmäßige Mattierung erreichen, insbesondere dann nicht, wenn die Folien unter erhöhten Temperaturen weiter behandelt werden, z. B. durch Tiefziehverfahren u. ä. Auch beim anderweitigen Gebrauch weisen diese Folien bald wieder durch Abrieb glänzende Stellen auf. Zudem ist man auf eine bestimmte Folienqualität festgelegt und die eventuelle Umrüstung des Kalanders für andere Folien ist sehr zeitaufwendig und somit teuer.

In der Folge sind daher auch schon verschiedene Versuche unternommen worden, durch Änderungen der Rezepturen und durch Zusätze, z. B. von gefällter Kieselsäure oder anderen anorganischen Mattierungsmitteln eine gleichmäßige Mattierung zu erreichen. Solche Zusätze anorganischer Mattierungsmittel haben jedoch vielfach eine nachteilige Veränderung der physikalischen Eigenschaften der daraus hergestellten Formkörper zur Folge, auch werden die Verarbeitungseigenschaften der damit abgewandelten Formmassen vielfach unerwünscht verändert oder gar verschlechtert. Dies kann sich z. B. durch erhöhten Abrieb der formgebenden Werkzeuge oder durch Belagsbildung bemerkbar machen, vielfach auch durch drastisch verringerte Thermostabilität der Mischung.

Zur Umgehung dieser Schwierigkeiten ist man später verschiedentlich dazu übergegangen, hochmolekulares Polyvinylchlorid (PVC) oder hochmolekulare Copolymerisate des Vinylchlorids (VC) den Kunststoff-, insbesondere PVC-Massen zuzusetzen.

In der DE-A 2 716 853 wird z. B. eine Formmasse beschrieben, die aus einer Mischung von zwei Anteilen von VC-Polymerisat mit unterschiedlichen mittleren Molekulargewichten besteht und die bei Rollknet-Kalandrierung zu Folien mit matter und rauher Oberfläche führt. Durch Extrusion hergestellte Formkörper aus solchen Formmassen weisen jedoch nicht den gewünschten Effekt seidenmatter Oberflächen auf, sondern die Oberflächen sind mehr oder weniger glänzend rauh. Soweit die dort beschriebenen Formmassen auf durch Emulsionspolymerisation hergestelltem PVC beruhen, sind sie für die Extrusion zu Hohlkörpern z. B. überhaupt ungeeignet.

Aus der DE-A 2 520 229 ist ein Verfahren zur Herstellung von Formkörpern mit einem « Frost- und Eiseffekt » bekannt, nach dem unter anderem ein weichmacherfreies oder weichmacherarmes, nach der Methode der Suspensionspolymerisation hergestelltes PVC mit einem K-Wert von 55 bis 65 eingesetzt wird. Diesem wird ein anderes Suspensions-PVC mit einem K-Wert über 65 beigemischt, wobei die K-Werte beider Polymerisate sich um mindestens 10 Einheiten unterscheiden sollen. Der Verbesserung des gewünschten Effektes soll ein Zusatz von chemischen Treibmitteln und/oder Talkum dienen. Es wurde gefunden, daß ohne die letztgenannten Zusätze ein nennenswerter Mattierungseffekt nur durch Verwendung sandgestrahlter Formen zum Aufrauhen der Kunststoffoberflächen erzielt werden kann.

Gemäß der CH-A 457 822 soll ebenfalls mit einem gewichtsmäßigen 30 : 70- bis 70 : 30-Gemisch von PVC-Typen, die sich im K-Wert um 10 bis 30 Einheiten unterscheiden, eine Mattierung erzielt werden. Hierbei ist darauf zu achten, daß bei der Verarbeitung auf einer aus der Kautschukindustrie bekannten Vulkanisiermaschine weder solche Temperaturen noch solche Verarbeitungszeiten erreicht werden, bei denen der höhermolekulare Kunststoff vollständig eingebunden bzw. ausgeliert wird.

In der EP-A 104 433 wird eine Formmasse auf der Basis von VC-Polymerisaten und deren Extrusionsverarbeitung beschrieben, die im wesentlichen aus 5-50 Gew.-% hochmolekularem, gegebenenfalls teilvernetztem und nach dem Suspensionsverfahren hergestelltem VC-Polymerisat mit einem K-Wert seines löslichen Teils von über 90 und 95-50 Gew.-% eines VC-Polymerisats mit einem K-Wert von 55-65 besteht. Diese Masse dient zur Herstellung von Flaschen und anderen Hohlkörpern mit seidenmatter Oberfläche.

Weiterhin hat sich erwiesen, daß Glanzminderung bis hin zu schwachen Mattierungseffekten bei der Verarbeitung von PVC-Plastisolen z. B. durch Zumischung größerer Mengen hochmolekularer PVC-Typen, die nach dem Mikrosuspensionsverfahren hergestellt worden sind, zu den Pasten auf Grundlage von PVC mit niedrigen bis mittleren Durchschnittsmolekulargewichten erreichbar sind. Zum Beispiel ist hierfür Vinnol[R] P 90 E geeignet (Vinnol ist ein eingetragenes Warenzeichen der Wacker-Chemie GmbH, München). Der Mattierungseffekt genügt für verschiedene Anwendungen jedoch noch nicht den Anforderungen. Überdies ist allen diesen vorstehend besprochenen Massen und Verfahren gemeinsam, daß sie stets nur für ein eng begrenztes Verarbeitungsverfahren, d. h. entweder nach dem Plastisol- oder nach dem Extrusions- oder nach dem Kalandrierverfahren, geeignet sind und vielfach rauhe Oberflächen und/oder unbefriedigende und/oder ungleichmäßige Mattierung ergeben.

Es bestand daher die Aufgabe, die vorstehend genannten Nachteile zu umgehen und die Möglichkeit zu eröffnen, mittels eines Zusatzpolymerisats weitgehend unabhängig von Verarbeitungsverfahren und von der Rezeptur (z. B. vom Weichmachergehalt) reproduzierbare, gleichmäßige und ausgeprägte Mattierung mit definierter Rauhigkeit ohne Glanzstellen zu erzielen, ohne daß praktisch die mechanischen Eigenschaften, die Thermostabilität und die chemische Beständigkeit verschlechtert werden.

So eignet sich das erfindungsgemäß als Mattierungsmittel verwendete hochmolekulare VC-Polymerisat, das einen Gelgehalt von 10 bis 99 Gew.-%, eine Quecksilber-Porosität von höchstens 0,2 $cm^3/g$, eine Weichmacheraufnahme von höchstens 15 %, einen Korngrößenkennwert d' von 10 bis 80 µm und einen Gleichmäßigkeitskoeffizienten n über 3 besitzt, besonders gut sowohl für den Einsatz in Kunststoffmassen, die bei der Hart- oder Weichverarbeitung eingesetzt werden, z. B. zur Herstellung von Folien und anderen flächigen Gebilden, insbesondere auf dem Kalander, und z. B. zur Herstellung von Extrudaten, als auch für den Einsatz in Plastisolen, worin sich zusätzlich noch der Vorteil einer Viskositätsverbesserung zeigt.

Die vorteilhafte Wirkung des hochmolekularen VC-Polymerisats, insbesondere die überraschend hohe und gleichmäßige Mattierung, die bei der Weiterverarbeitung z. B. durch Tiefziehverfahren sogar noch verstärkt werden kann, und die nicht vorhersehbare Möglichkeit, das Mattierungsmittel sowohl bei Hartrezepturen als auch Weich- oder sogar Plastisolrezepturen einsetzen zu können, kann schon bei einem äußerst geringen Zusatz von 1 bis 50 Gew.-%, bezogen auf das Gesamtgewicht der Polymerisate, d. h. des Mattierungsmittels und des Matrixpolymeren, erreicht werden. Bei thermoplastischer Verarbeitung, also zur Herstellung von Hart- und Weich-Produkten, genügen vorzugsweise 2-10 Gew.-%, bei der Plastisolverarbeitung vorzugsweise 10-50 Gew.-%.

Der Gelgehalt des Mattierungsmittels, d. h. der bei Extraktion mit siedendem Tetrahydrofuran in einer Soxhlet-Apparatur über 48 h unlösliche Rückstand beträgt 10-99 Gew.-%, vorzugsweise über 25 Gew.-%, insbesondere 40-90 Gew.-%. Höhere Gelanteile, z. B. über 50 Gew.-%, ergeben dabei bessere Mattierung, die niedrigeren ergeben zumindest deutliche Glanzminderung. Seine Porosität, gemessen als Quecksilber-Porosität bei Drücken bis 300 bar, beträgt vorzugsweise höchstens 0,15, mehr bevorzugt höchstens 0,10, insbesondere höchstens 0,05 $cm^3/g$, die Weichmacheraufnahme nach DIN 53 417 (Deutsche Industrienorm) liegt bei höchstens 15 %, vorzugsweise höchstens 10 %, insbesondere höchstens 7 %. Das Mattierungsmittel besitzt eine sehr gleichmäßige Körnung, ausgedrückt als Korngrößenkennwert d' und Gleichmäßigkeitskoeffizient n nach der Rosin-Rammler-Gleichung (vgl. DIN 66 141 oder Vauck-Müller, « Grundoperationen chemischer Verfahrenstechnik », 5. Auflage, Dresden, 1962, Seite 234). Der Kennwert d' liegt vorzugsweise bei 10-80, insbesondere 30-70 µm, der Koeffizient n vorzugsweise über 4. Die Angabe eines K-Wertes hat sich wegen des hohen Gelanteils als nicht sinnvoll zur Charakterisierung des Mattierungsmittels erwiesen.

Das Mattierungsmittel kann zusammen mit üblichen nach den Suspensions-, Emulsions-, Mikrosuspensions- oder Blockpolymerisationsverfahren hergestellten VC-Polymerisaten, die hier als Matrixpolymerisat bezeichnet werden, eingesetzt werden. Das Matrixpolymerisat besitzt je nach Verarbeitungsverfahren vorzugsweise K-Werte von 50-85. Es sind sogar verschiedentlich Matrixpolymerisate mit K-Werten bis 100 einsetzbar. Hierbei ist jedoch zu beachten, daß beim Einsatz von Matrixpolymeren höheren K-Wertes um so bessere Mattierung erreicht wird, je größer der Gelanteil im Mattierungsmittel ist. Die Matrixpolymerisate mit K-Werten von vorzugsweise 50-80, insbesondere unterhalb 70, können besonders gut bei der Hartverarbeitung eingesetzt werden, diejenigen mit K-Werten von vorzugsweise 60-85, insbesondere 65-80, eignen sich besonders für die Weichverarbeitung und Pastenverarbeitung. Für letztere sind auch die Polymerisate mit den höheren genannten K-Werten einsetzbar.

Da Rezepturen für die Hart-, die Weich- und die Plastisolverarbeitung von VC-Polymerisaten allgemein bekannt sind, sollte sich hier eine Wiederholung erübrigen. Einzelne hier eventuell ungeeignete Rezepturen kann der Fachmann spätestens nach wenigen Vorversuchen als solche erkennen und ausscheiden. Es sei nur erwähnt, daß selbstverständlich die jeweils üblichen Zusätze auch erfindungsgemäß mitverwendet werden können, insbesondere die Weichmacher, z. B. auf Basis von Dicarbonsäure- und Phosphorsäureestern, Licht- und Wärmestabilisatoren, z. B. auf Zn-, Cd-, Ba-, Pb- und Sn-Basis, Verarbeitungshilfen, z. B. Gleitmittel auf z. B. Acrylatbasis, Schlagzähmodifier, z. B. auf Basis von Ethylen-, Vinylacetat-, Acrylat-, Ethylen-Vinylacetat-VC-Copolymeren oder -Pfropfcopolymeren sowie ABS und MBS (vgl. DIN 7728). Auch Pigmente und/oder Füllstoffe sind nicht ausgeschlossen. Eine Aufstellung von geeigneten Zusätzen kann z. B. der EP-A-104 433 entnommen werden. Diese Zusätze können in den üblichen Mengen verwendet werden.

Selbstverständlich kann das erfindungsgemäße Mattierungsmittel auch in Kombination mit bisher bekannten verwendet werden aber auch, z. B. in Kombination mit dem genannten Vinnol[R] P 90E, das alleine keine echte Mattierung, sondern praktisch nur Glanzminderung bewirkt.

Das erfindungsgemäß als Mattierungsmittel verwendete hochmolekulare VC-Polymerisat kann durch Zusatz von Vernetzern wie Di-allylphthalat, -maleinat, Triallylisocyanurat, Diallylether, Divinylverbindungen, Di- und Triacrylestern oder -methacrylestern mehrwertiger Alkohole bei der (Co)Polymerisation von Vinylchlorid und ggf. damit copolymerisierbaren Monomeren aus der Gruppe der Vinylester, wie vorzugsweise Vinylacetat und/oder -propionat, (Meth-)Acrylsäureester, wie vorzugsweise Butylacrylat und/oder Methylmethacrylat, Maleinsäureester, Fumarsäureester und ähnlichen copolymerisierbaren ansonsten nicht funktionellen Verbindungen nach dem Block- (Masse-) oder dem Suspensionspolymerisationsverfahren hergestellt werden. Die Menge des Vernetzers wird vom Fachmann so gewählt, daß der gewünschte Gelgehalt des Polymerisates erhalten wird, die gewünschte Kornmorphologie kann in Anlehnung an die Verfahren der DE-A 1 645 668, DE-A 2 252 340 und EP-A 28 812 erreicht werden. Der Anteil der genannten nicht vernetzenden Comonomeren liegt bei 0-40 Gew.-%, vorzugsweise 0 bis 20 Gew.-%, bezogen auf Gesamtmonomerengewicht. Bei verschiedenen Anwendungen werden Copolymere bevorzugt, bei deren Herstellung mindestens 5 Gew.-% solcher nicht vernetzenden Comonomeren mitverwendet werden.

Die erfindungsgemäßen Kunststoffmassen zeigen bereits bei Gehalten von 1-50, insb. bei thermoplastischer Verarbeitung 2-10, bei Plastisolverarbeitung 10-50 Gew.-%, bezogen auf Gesamtpolymergehalt, an Mattierungsmittel eine gute bis sehr gute Mattierung, die sich z.B. durch Reckung sogar noch steigern läßt, mit sehr gleichmäßiger Oberflächenstruktur, die z.B. der entspricht, die mit frisch sandgestrahlten Kalanderwalzen erreicht werden kann.

Das erfindungsgemäße Mattierungsmittel zerfällt selbst bei der Scherung und höheren Verarbeitungstemperatur nicht in seine Primärteilchen, wie dies die bisher üblichen Mattierungsmittel auf Kunststoffbasis tun, die durch Emulsions-, Mikrosuspensions- und teilweise auch Suspensionspolymerisation hergestellt worden sind, und sichert somit die Mattierung auch bei PVC-Hartprodukten. Wenn durch Zerfall der Sekundärstruktur eines Mattierungsmittels Primärteilchen entstehen, so läßt sich durch die Feinheit nur noch eine Glanzminderung, nicht aber eine gleichmäßig matte Oberfläche erreichen.

Hochmolekulares Masse- und Suspensions-PVC üblicher Kornstruktur kann zwar mattieren, die erzielbare Wirkung hängt jedoch extrem stark von der Verarbeitung und der Rezeptur, z. B. Weichmachergehalt, ab. Bleiben die Sekundärstrukturen erhalten, so führt dies zu einer sehr rauhen oder uneinheitlichen Oberfläche und zu einer deutlichen Verschlechterung der mechanischen Eigenschaften, z. B. Verringerung der Reißdehnung und des Weiterreißwiderstandes. Bei höherer Scherung und höheren Verarbeitungstemperaturen zerfallen auch bei diesen herkömmlichen M- oder S-PVC-Produkten die Sekundärstrukturen mehr und mehr, wodurch wieder die Oberfläche sehr inhomogen oder gar glatt wird.

Auch die Vernetzung von solchen S-PVC-Produkten beheben diese Nachteile nur teilweise.

Demgegenüber ergeben die erfindungsgemäßen Mattierungsmittel und die damit hergestellten Kunststoffmassen reproduzierbar gleichmäßige Oberflächenmattierung mit gleichmäßiger definierter Rauhigkeit bei den unterschiedlichsten Verarbeitungsverfahren und -bedingungen sowohl bei Hart-, Weich- und Pastenverarbeitung ohne merkliche Beeinträchtigung der mechanischen Eigenschaften, der Thermostabilität und der chemischen Beständigkeit. Bei der Pastenverarbeitung ergibt sich zudem noch eine vorteilhafte Viskositätserniedrigung.

Die folgenden Beispiele dienen der weiteren Erläuterung der Erfindung. Angegebene K-Werte sind stets solche gemäß DIN 53 726.

Gemäß den folgenden Beispielen wurde die Eignung erfindungsgemäßer und nicht erfindungsgemäßer Mattierungsmittel für verschiedene Verarbeitungsverfahren von PVC-Massen untersucht. Dabei wurden die Mattierungsmittel in folgende Grundrezepturen eingemischt: (Bei der Nullrezeptur ohne Mattierungsmittel wurden jeweils 100 Gewichtsteile des Matrixpolymerisates, bzw. des Gemisches der Matrixpolymerisate eingesetzt).

Hartverarbeitung

1. Grundrezeptur für Folienkalandrierung

95  Gew. Tle Vinnol[R] Y 60 MS (Masse-PVC mit K-Wert 60, Wacker-Chemie GmbH, München)
 5  Gew.Tle Mattierungsmittel
1,3 Gew.Tle Schwefel-Zinn-Stabilisator
0,5 Gew.Tle Glycerinmonooleat
0,3 Gew.Tle Montansäure-Esterwachs
 2  Gew.Tle Titandioxid-Pigment
Vorplastifizierung
— Variante I diskontinuierlich mit Mischwalzwerk 5 min. bei 165 °C
— Variante II kontinuierlich mit Einschneckenextruder Massetemperatur bei Düsenaustritt 175 °C.
Folienherstellung auf 4-Walzen-Kalander in L-Form Folienabzugsverhältnis jeweils 1 : 1,15 und 1 : 2,5.

2. Grundrezeptur für Breitschlitzdüsen-Folienextrusion

95  Gew.Tle Vinnol[R] E 60 RN (Emulsions-PVC mit K-Wert 60, Wacker-Chemie GmbH, München)
und Vinnol[R] H 10/60 (Suspensions-PVCA mit K-Wert 60,
10 % Vinylacetatgehalt, Wacker-Chemie GmbH, München)
 5  Gew.Tle Mattierungsmittel
2,2 Gew.Tle Ca-Zn-Stabilisator

4

5 Gew.Tle epoxidiertes Sojabohnenöl
0,5 Gew.Tle handelsübliches Kombinationsgleitmittel
0,2 Gew.Tle Polyethylenwachs
3 Gew.Tle Titandioxid-Pigment und Gelbpigment

3. Grundrezeptur für Flaschenblasen

95 Gew.Tle Vinnol(R) Y 57 M (Masse-PVC mit K-Wert 57, Wacker-Chemie GmbH, München)
5 Gew.Tle Mattierungsmittel
1,2 Gew.Tle Schwefel-Zinn-Stabilisator
8 Gew.Tle MBS-Schlagzähmodifier
0,8 Gew.Tle Kombinationsgleitmittel
0,1 Gew.Tle Polyethylenwachs

4. Grundrezeptur für schlagzähe Hartprofile (z. B. für Fensterprofile)

50 Gew.Tle Vinnol(R) K 510/68 (Pfropfpolymerisat von Vinylchlorid auf Ethylenvinylacetatcopolymer, Wacker-Chemie GmbH, München, K-Wert 68)
45 Gew.Tle Vinnol(R) H 65 D (S-PVC mit K-Wert 65, Wacker-Chemie GmbH, München)
5 Gew.Tle Mattierungsmittel
2,5 Gew.Tle Ba-Cd-Stabilisator
0,5 Gew.Tle Phosphitchelator
3 Gew.Tle Pigmente + Füllstoffe
0,8 Gew.Tle Gleitmittel

5. Grundrezeptur für thermoplastische Weichverarbeitung (Kalander, Extrusion, Blasenextrusion)

90 Gew.Tle Vinnol(R) H 70 DF (S-PVC mit K-Wert 70, mit besonders hoher Weichmacheraufnahme)
10 Gew.Tle Mattierungsmittel
40 Gew.Tle Dioctylphthalat (DOP, Diethylhexylphthalat)
2 Gew.Tle Ba-Cd-Zn-Stabilisator Verarbeitung analog Grundrezeptur 1

6. Grundrezeptur für Pastenverarbeitung (Deckstrich für Fußbodenbeläge)

40 Gew.Tle Vinnol(R) E 79 CS (Emulsions-PVC mit K-Wert 79, Wacker-Chemie GmbH, München)
25 Gew.Tle Vinnol(R) P 70 (Mikrosuspensions-PVC mit K-Wert 70, Wacker-Chemie GmbH, München)
35 Gew.Tle Mattierungsmittel
35 Gew.Tle Benzylbutylphthalat (BBP)
7 Gew.Tle Dodecylbenzol
1 Gew.Tl Zinn-Stabilisator

Als Mattierungsmittel bzw. als Vergleichssubstanzen wurden eingesetzt (PVCA = Copolymere auf Basis von Vinylchlorid/Vinylacetat) :

a) Polyvinylchlorid mit einem Gelanteil von 83-84 %, hergestellt gemäß DE-OS 1645 668 unter Zusatz von 0,4 Gew.-% Triallylisocyanurat (TAC, % bezogen auf VC)
b) Polyvinylchlorid mit einem Gelanteil von ca. 53 %, hergestellt wie a), jedoch mit 0,2 Gew.-% TAC
c) Polyvinylchlorid mit K-Wert 100, löslich in Cyclohexanon, hergestellt nach dem Mikrosuspensionsverfahren
d) Polyvinylchlorid mit K-Wert 78-79, hergestellt nach dem Emulsionsverfahren (Vinnol(R) E 78 G, Wacker-Chemie GmbH, München)
e) Polyvinylchlorid analog a), jedoch ohne TAC-Zusatz hergestellt
f) S-PVC, hergestellt gemäß einer Rezeptur für K-Wert 70 unter Zusatz von 0,4 % TAC, mit Gelanteil von 75-80 %
g) handelsübliche gefällte Kieselsäure
h) handelsübliches Mattierungsmittel auf Acrylatbasis
i) S-PVC, mit K-Wert 10, noch löslich.
k) PVCA (Vinylacetatanteil 14 Gew.-% auf Gesamtmonomere) mit einem Gelanteil von 56-57 %, hergestellt gemäß DE-OS 16 45 668 unter Zusatz von 0,5 Gew.-% Triallylisocyanurat (TAC, % bezogen auf VC und VAC)
l) PVCA (15 Gew.-% VAC) mit einem Gelanteil von 66-67 %, hergestellt wie a), jedoch mit 0,3 Gew.-% TAC.

Die Versuchsergebnisse sind in der folgenden Tabelle niedergelegt. Dabei bedeuten :
— keine mattierende Wirkung festgestellt
0 Glanzminderung
+ gleichmäßige Mattierung
× unregelmäßige stippige Oberfläche.

| Beispiel Vgl.versuch | Mattierungs- bzw.Vgl. mittel | Hartverarbeitung | | | | |
| --- | --- | --- | --- | --- | --- | --- |
| | | Kalanderverfahren Variante I | Variante II | Breitschlitz- düsen-Folie | Flaschen- blasen | ·Profil- extrusion |
| 1 | a | + | + | + | + | + |
| 2 | b | 0 | + | + | + | + |
| 3 | a+5 Gew.Tle Vinnol(R) P 90 E | + | + | | | |
| A | ohne | − | − | − | − | − |
| B | c | 0 | 0 | | | |
| C | d | − | − | 0 | | |
| F | e | − | − | − | | |
| E | f | x | x | | | |
| F | g | x | x | | | |
| G | h | 0 | + | | | |
| H | i | 0 | | x | x | x |
| 4 | k | + | + | + | + | + |
| 5 | l | + | + | + | + | + |
| 6 | k+5 Gew.Tle Vinnol(R) P 90 E | + | + | | | |

0 172 562

| Beispiel Vgl. versuch | Weichverarbeitung Kalanderfolien Variante I | Variante II | Blasfolien | Formteil | Pasten |
|---|---|---|---|---|---|
| 1 | + | + | + | + | + |
| 2 | 0 | + | .+ | + | + |
| 3 | | | | | |
| A | − | − | − | − | − |
| B | 0 | | | 0 | 0 |
| C | − | − | | | |
| D | | | | | |
| E | | | | | |
| F | | | | | |
| G | x | x. | x | x | x |
| H | x | x | x | x | x |
| 4 | + | + | + | + | + |
| 5 | + | + | + | + | + |

**Patentansprüche**

1. Mattierungsmittel auf der Basis hochmolekularen gelhaltigen Vinylchlorid-Polymerisats, dadurch gekennzeichnet, daß sein Gelgehalt 10-99 Gew.-%, seine Quecksilberporosität höchstens 0,2 cm³/g, seine Weichmacheraufnahme höchstens 15 %, sein Korngrößenkennwert d' bei 10-80 µm und sein Gleichmäßigkeitskoeffizient n über 3 liegen.

2. Kunststoffmasse auf Basis von Vinylchlorid-Polymerisaten zur Herstellung von Formkörpern, flächigen Gebilden oder Beschichtungen mit seidenmatter Oberfläche, bestehend aus Vinylchlorid-Matrixpolymerisat, Mattierungsmittel und gegebenenfalls üblichen Zusätzen, dadurch gekennzeichnet, daß das Mattierungsmittel gemäß Anspruch 1 verwendet wird.

3. Masse nach Anspruch 2 zur Hartverarbeitung, dadurch gekennzeichnet, daß das Matrix-Polymerisat einen K-Wert von 50-80 besitzt.

4. Masse nach Anspruch 2 zur Weichverarbeitung, dadurch gekennzeichnet, daß das Matrix-Polymerisat einen K-Wert von 60-85 besitzt.

5. Verwendung des Mattierungsmittels gemäß Anspruch 1 in Plastisolen basierend auf Matrixpolymerisat mit einem K-Wert von 60-100.

**Claims**

1. Flatting agent based on a high-molecular, gel-containing vinyl chloride polymer, characterized in that its gel content is 10-99 % by weight, its mercury porosity is at most 0.2 cm³/g, its plasticizer absorption is at most 15 %, its particle size coefficient d' is 10-80 µm and its homogeneity coefficient n is more than 3.

2. Plastics composition based on vinyl chloride polymers for the production of mouldings, sheet-like structures or coatings having a silky flat surface, consisting of a vinyl chloride matrix polymer, a flatting agent and, if appropriate, conventional additives, characterized in that the flatting agent according to Claim 1 is used.

3. Composition according to Claim 2 for processing without plasticizer, characterized in that the matrix polymer has a K value of 50-80.

4. Composition according to Claim 2 for processing with plasticizer, characterized in that the matrix polymer has a K value of 60-85.

5. Use of the flatting agent according to Claim 1 in plastisols based on a matrix polymer having a K value of 60-100.

**Revendications**

1. Agent de matité à base d'un polymère de chlorure de vinyle à haute masse moléculaire contenant du gel, agent caractérisé en ce que sa teneur en gel est de 10 à 99 % en poids, sa porosité à l'égard du mercure d'au maximum 0,2 cm³/g, son absorption de plastifiants d'au maximum 15 %, sa granularité d' de 10 à 80 µm et son coefficient de régularité n supérieur à 3.

2. Matières plastiques à base de polymères du chlorure de vinyle pour la fabrication d'objets moulés et d'articles plats ou pour la formation de revêtements dont la surface à la matité de la soie, matières constituées d'un polymère de chlorure de vinyle formant matrice, avec un agent de matité et le cas échéant des additifs habituels, qui sont caractérisées en ce que l'agent de matité est un agent selon la revendication 1.

3. Matière selon la revendication 2 pour traitement de transformation à l'état dur, caractérisée en ce que le polymère formant la matrice a une valeur K comprise entre 50 et 80.

4. Matière selon la revendication 2 pour traitement de transformation à l'état plastifié, caractérisée en ce que le polymère formant la matrice a une valeur K comprise entre 60 et 85.

5. Emploi de l'agent de matité selon la revendication 1 dans des plastisols à base d'un polymère formant matrice ayant une valeur K comprise entre 60 et 100.